# FASCICULE DE BREVET EUROPEEN

(11) **EP 1 340 446 B1**
(45) Date de publication et mention de la délivrance du brevet: **11.07.2012**
(21) Numéro de dépôt: 03356018.6
(22) Date de dépôt: 04.02.2003
(51) Int. Cl.: A47L 9/20, A47L 5/38, B01D 46/04, B01D 46/10, B01D 46/44, B01D 46/00

(54) **Procédé de décolmatage automatique du filtre d'un système d'aspiration centralisé et dispositif correspondant**
Verfahren zur automatischen Abreinigung von Filtern zentraler Staubsauganlagen und entsprechende Vorrichtung
Process for automatic dedusting of filters of central vacuum cleaner and corresponding apparatus

(30) Priorité: 18.02.2002 FR 0202033
(43) Date de publication de la demande: 03.09.2003
(73) Titulaire: ALDES AERAULIQUE, 69200 Venissieux Cedex (FR)
(72) Inventeur: Boulanger, Xavier, 31460 Loubens Lauragais (FR)
(74) Mandataire: Maureau, Philippe

(56) Documents cités:
- WO-A-95/34238
- DE-A- 2 106 058
- DE-A- 19 949 095
- DE-B- 1 245 550
- DE-C- 4 138 223
- US-A- 4 277 265
- US-A- 4 921 510
- US-A- 5 951 746

## Description

La présente invention concerne un dispositif de décolmatage automatique du filtre d'un système d'aspiration centralisé. L'invention concerne aussi une installation d'aspiration centralisée munie d'un tel dispositif permettant de procéder au décolmatage automatique du filtre.

Dans le domaine de l'aspiration de poussière, de nombreux filtres sont utilisés: la plupart d'entre eux se trouvent au milieu du flux d'air et sont traversés de part en part. Certaines particules très fines traversent le filtre sans être arrêtées et ne provoquent donc pas de colmatage du filtre. Les particules de très gros calibre sont retenues du côté de l'entrée d'air du filtre. Elles tombent alors dans une cuve de réception. Les particules de taille moyenne s'infiltrent quant à elles à l'intérieur du filtre et y restent bloquées, colmatant ainsi le filtre et le rendant de plus en plus résistant au passage de l'air. Le côté le plus sale du filtre est donc le côté d'arrivée du flux d'air pendant le fonctionnement du système.

Pour nettoyer et décolmater un filtre, il faut enlever les particules accumulées du côté entrée d'air, mais également chasser les particules enchâssées dans les pores - à l'intérieur - du filtre.

Les méthodes de décolmatage connues sont variées. Une première méthode, simple, consiste à remuer, secouer, ou même taper le filtre afin de faire tomber les particules. Cette technique, décrite par exemple dans US 410.524, permet de décoller les particules plaquées contre les parois du filtre, mais n'est pas très efficace pour extraire les particules qui ont pénétré à l'intérieur du filtre lui-même. Le nettoyage est donc imparfait.

Une deuxième méthode consiste à chasser les particules grâce à un puissant jet d'air ou autre fluide sous pression, tangentiellement à la surface sale du filtre. Les résultats sont meilleurs que la méthode précédente, mais sans extraire la totalité des particules bloquées dans les pores du filtre.

Une troisième méthode consiste à faire traverser le filtre par un flux d'air propre en sens inverse du flux d'air en fonctionnement normal. Les particules collées contre la paroi sale sont donc chassées par le flux d'air ayant traversé le filtre. Lorsqu'il traverse le filtre, le flux d'air entraîne aussi avec lui une grande partie des particules bloquées dans les pores du filtre. Cette méthode est décrite dans de nombreux documents; citons US 4.445.912 ; US 4.862.914 ; US 3.948.127 ; US 5.948.127 ; US 4.862.914 ; US 3.948.127 ; US 5.948.127 ; US 4.826.512 ; US 4.624.689 ; US 6.319.295. Néanmoins, tout ces documents nécessitent la mise en oeuvre d'une source de flux à contre-courant spécifique, et donc un système globalement compliqué.

Dans WO 95/34238, le principe de décolmatage à contre-courant est repris. Il fonctionne par mise en dépression du système suivie d'une soudaine mise à l'air libre de manière à créer une brusque entrée d'air à contre-courant dans les filtres. Ce procédé est combiné à une action mécanique: les filtres comportent des ressorts qui étirent brusquement les membranes desdits filtres lorsque l'on soumet l'installation au contre-courant, ou lorsque l'on arrête la turbine. Le principe de décolmatage décrit comporte néanmoins certains désavantages. D'abord, le décolmatage régulier ne se fait que grâce à l'action purement mécanique du filtre monté sur ressorts. L'action, optionnelle, d'une mise à l'air libre de l'espace entre le filtre et la moto-turbine ne se fait qu'occasionnellement et pas automatiquement. En effet, ce dispositif de mise à l'air libre est entièrement manuel, et donc soumis à l'action de l'utilisateur, ce qui rend le procédé de décolmatage par mise à l'air libre complètement aléatoire, et de plus fastidieuse pour l'utilisateur. Enfin et surtout, la nature du filtre utilisé dans l'invention décrite dans la demande citée ci-dessus, est spécifique, et comporte des ressorts.

D'autres procédés manuels de décolmatage de filtre par mise en dépression de la cuve en amont du filtre suivie d'une mise à l'air libre de sa partie aval sont décrits dans DK 96 00436 U3, DE 2.106.058 ou US 3.653.190. Tout ces procédés manuels utilisés pour des installations d'aspiration mobiles, sont néanmoins tout à fait inadaptés lorsqu'il s'agit de faire fonctionner une installation d'aspiration centralisée, c'est-à-dire dans lesquels la moto-turbine, la cuve, et les filtre sont situés à distance de l'endroit d'utilisation (par exemple dans la cave ou le garage, lorsque l'aspiration se fait dans les autres pièces de la maison). En effet, il est alors impossible pour l'utilisateur de déterminer à quel moment le filtre est colmaté, et quand bien même il désire procéder au décolmatage, il doit traverser tout le bâtiment pour se rendre dans la pièce dans laquelle se trouve la centrale d'aspiration, ce qui est évidemment fastidieux. Il en résulte que le décolmatage est réalisé de manière aléatoire et donc inefficace.

Le document US 5 951 746 décrit un système de décolmatage d'un aspirateur isolé, dans lequel l'utilisateur peut, lors du fonctionnement de cet aspirateur, appuyer sur un piston pour provoquer l'obturation de l'orifice d'aspiration, immédiatement suivie de l'ouverture d'un orifice d'entrée d'air, en sens inverse.

La présente invention a pour but de résoudre les problèmes de décolmatage des installations d'aspiration centralisées, en évitant les désavantages des procédés et installations cités ci-dessus. La présente invention fournit donc un dispositif de décolmatage d'installations d'aspiration centralisées qui permette à moindre coût de décolmater très efficacement les filtres d'aspiration de toute sorte - comme par exemple de simples blocs de feutre ou de mousse -, et pouvant fonctionner avec n'importe quel type de filtre. Le décolmatage selon la présente invention ne se fait pas occasionnellement, mais régulièrement et automatiquement, que ce soit en phase d'arrêt de l'installation d'aspiration ou même pendant le fonctionnement, ce qui assure un entretien excellent de toute l'installation d'aspiration, et son niveau d'efficacité constant, même pour des installations utilisant des filtres simples.

Plus particulièrement, les objectifs cités ci-dessus sont réalisés avec un ensemble d'aspiration tel que défini dans la revendication 1.

Dans un mode de réalisation, le module de gestion électronique commande en outre l'ouverture automatique des moyens de mise à l'air libre pendant le fonctionnement en aspiration, à dépression non-maximale dans la cuve et par impulsions répétées.

Avantageusement, les moyens de mise à l'air libre sont constitués d'un volet basculant.

En outre, les moyens de mise à l'air libre permettent de préférence lorsqu'ils sont en position de mise à l'air libre du filtre, de simultanément obturer la prise d'air de la moto-turbine.

Enfin, l'invention concerne aussi une installation d'aspiration centralisée, comprenant une cuve pour l'accumulation des poussières, un système de canalisations connecté à la cuve, les canalisations étant terminées par des prises obturables, une moto-turbine capable de créer un flux d'aspiration dans la cuve et dans l'ensemble de canalisations, un filtre à poussières situé entre la cuve et la moto-turbine, caractérisé en ce qu'elle comporte un dispositif de décolmatage automatique comportant un bloc de mise à l'air libre et un module de gestion électronique, comme celui décrit ci-dessus.

L'invention sera bien comprise à l'aide de la description détaillée qui suit, et en référence au dessin schématique annexé représentant à titre d'exemples non limitatifs plusieurs formes d'exécution d'une installation d'aspiration centralisée:
Figure 1 en est une vue en perspective avec coupe partielle de la cuve d'aspiration.
Figures 2a à 2d en sont des vues en coupe longitudinale.
Figures 3 et 4 en sont deux vues en coupe longitudinale, respectivement en mode d'aspiration et au cours du décolmatage du filtre.
Figures 5 et 6 sont deux vues en coupe longitudinale et à l'échelle agrandie de deux formes d'exécution du bloc de mise à l'air libre.

Pour des raisons de clarté de description, on convient dans ce qui suit que les éléments de l'installation d'aspiration centralisée 1 sont orientés les uns par rapport aux autres selon le sens d'écoulement de l'air en fonctionnement normal: le point le plus en amont étant représenté par le point où l'air est aspiré, et le point le plus en aval représenté par la sortie d'air filtré de l'installation. Par définition, on entend par "mise à l'air libre" la création d'une entrée d'air à pression atmosphérique dans la portion de l'installation l'installation d'aspiration habituellement soumis à une dépression pendant le fonctionnement de l'installation en mode d'aspiration.

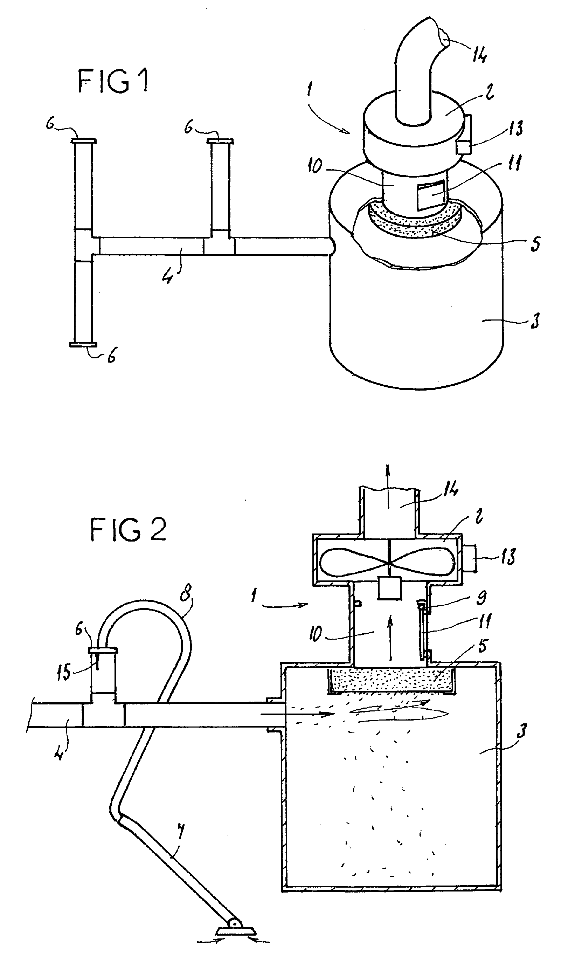

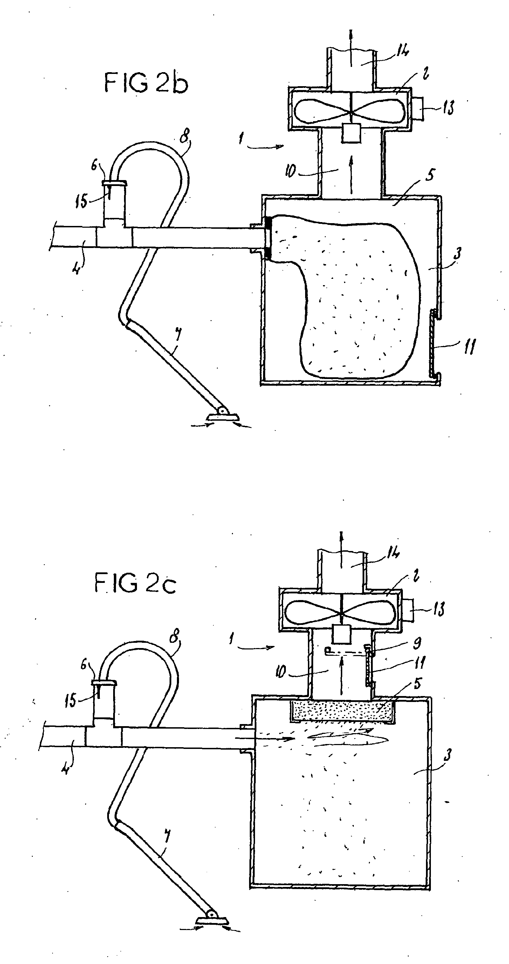

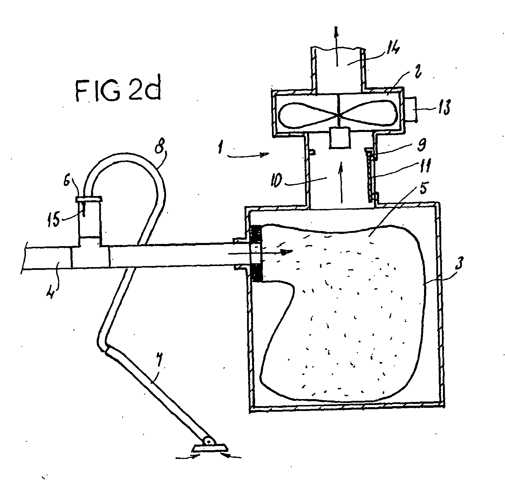

Les figures 1 à 6 schématisent une telle installation centralisée d'aspiration 1. On peut noter, en particulier sur les figures 1 et 2, que l'installation d'aspiration 1 comporte une moto-turbine 2 comprenant un moteur et un système de pales d'aspiration. La moto-turbine est connectée à une cuve 3 pour la rétention des poussières et particules aspirées, ladite cuve 3 comprenant deux ouvertures: l'une pour la connexion en amont, à un ensemble de canalisations 4, l'autre, en aval pour connexion, à une moto-turbine 2. Un filtre à poussières 5 qui filtre l'air aspiré en amont de l'installation est situé entre la cuve 3 proprement dite et la mototurbine 2. Selon un premier mode de réalisation de l'invention illustré par exemple à la figure 2c, le filtre est constitué d'un élément de préférence plat, fait d'un matériau alvéolaire, qui est placé entre la sortie aval de la cuve 3 et la mototurbine 2. Selon un deuxième mode de réalisation de l'invention, représenté aux figures 2b et 2d, le filtre 5 est constitué d'un sac filtre dont l'ouverture est connectée de manière étanche à l'ouverture amont de la cuve 3, le sac filtre étant disposé à l'intérieur de la cuve de telle manière que l'une au moins de ses parties est positionnée à la sortie aval de la cuve 3 entre ladite cuve et la mototurbine 2, pendant le fonctionnement de l'installation d'aspiration. Dans la description ci-après, on considèrera que le filtre est un élément alvéolaire selon le premier mode de réalisation de l'invention décrit ci-dessus. Chaque canalisation de l'ensemble 4 est terminée par une prise d'air obturable 6. Un balai d'aspiration 7 manipulé par l'utilisateur est connecté pendant l'utilisation à l'une des prises d'air 6 par l'intermédiaire d'un flexible 8.

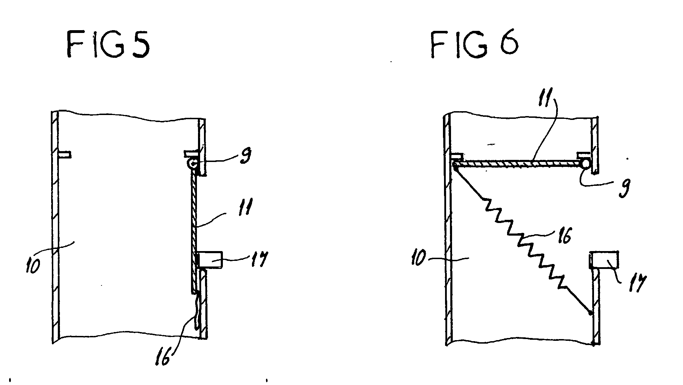

Selon l'invention, et comme illustré aux figures 1 ou 2, un bloc de mise à l'air libre 10 fait la liaison - en aval du filtre 5 - entre la cuve 3 et la moto-turbine 2. Le bloc de mise à l'air libre 10 comporte des moyens mobiles de mise à l'air libre 11 qui, en position de fonctionnement normal du système d'aspiration, obturent une ouverture de mise à l'air libre 12 - qui donne accès à l'air ambiant à pression atmosphérique -. Les moyens de mise à l'air libre peuvent consister en un volet 11, basculant autour d'un axe 9 comme illustré aux figures 5 et 6. Dans la description qui suit, on décrira les moyens de mise à l'air libre comme un volet basculant, ce terme de "volet" étant utilisé de manière non-limitative. L'installation centralisée d'aspiration 1 comprend également un module électronique de gestion du décolmatage 13, qui contrôle le fonctionnement de la moto-turbine 2, mais également l'ouverture et la fermeture du volet 11. De préférence, le module de gestion électronique 13 est également connecté à chacune des prises d'air 6, afin de pouvoir détecter seul, le cas échéant, à quel moment l'utilisateur branche ou débranche le balai d'aspiration 7 à l'une de ces prises 6.

La moto-turbine 2 est équipée d'une sortie d'air 14 pour expulser l'air d'aspiration filtré qui provient de la cuve 3.

Le volet 11 peut comporter différents types de mécanismes d'ouverture. Il s'agit de s'assurer que l'ouverture du volet se fait très rapidement, voire instantanément, et donc que la mise à l'air libre du système est efficace. En particulier, il a été découvert que pour un décolmatage efficace, le passage de la position fermée à la position ouverte du volet, ne doit de préférence pas excéder 20ms.

Dans un des modes préférés de l'invention, le volet est fermé de deux manières différentes. Lorsque l'installation 1 est arrêtée, le volet 11 est plaqué sur l'ouverture de mise à l'air libre 12 par un ressort 16. Lorsque l'installation 1 est en fonctionnement, le volet reste plaqué en position fermée, comme illustré à la figure 5, par une ventouse électromagnétique: un électroaimant 17 situé dans le bloc de mise à l'air libre 10 à proximité de l'ouverture de mise à l'air libre 12, génère un champ magnétique d'une force suffisante pour contrer l'effet d'aspiration de la moto-turbine 2. Pour l'ouverture du volet en mise à l'air libre, le module de gestion électronique coupe l'alimentation électrique de l'électroaimant. Le volet est alors aspiré violemment et quasi-instantanément par la moto-turbine, en position ouverte. Lorsque la mise à l'air libre est terminée, le module de gestion électronique réactive l'électro-aimant en rétablissant l'alimentation électrique de ce dernier, dont le champ magnétique est suffisant pour attirer le volet en position fermée d'obturation de l'ouverture de mise à l'air libre 12.

Dans un autre mode de réalisation de l'invention, on peut envisager que l'ouverture du volet s'effectue par l'aspiration par la moto-turbine 2, et/ou par un second électro-aimant - non représenté sur le dessin - situé à proximité de l'ouverture entre le bloc (10) et la moto-turbine (2), qui crée une force d'attraction supplémentaire: ainsi le volet bascule entre les deux positions ouverte/fermée par attirance de l'électro-aimant correspondant.

Différentes tailles ou formes de volets peuvent être envisagées, néanmoins, on veillera à ce que le volet soit le plus grand possible. En effet, le débit de décolmatage dépend des pertes de charge au passage le plus étroit: si le volet est de taille suffisante, c'est le filtre qui détermine lui-même le débit, on est alors au point d'efficacité maximale. Ce débit peut-être largement supérieur au débit de l'installation d'aspiration.

L'ensemble comprenant d'une part le bloc de mise à l'air libre 10 avec son ouverture 12 et le volet mobile de mise à l'air libre, et d'autre part le module électronique de gestion 13, constitue un dispositif de décolmatage automatique efficace, qui peut éventuellement être adapté sur une installation existante, après de légères modifications de cette dernière, de manière à réaliser une installation conforme à celle qui est décrite ci-dessus.

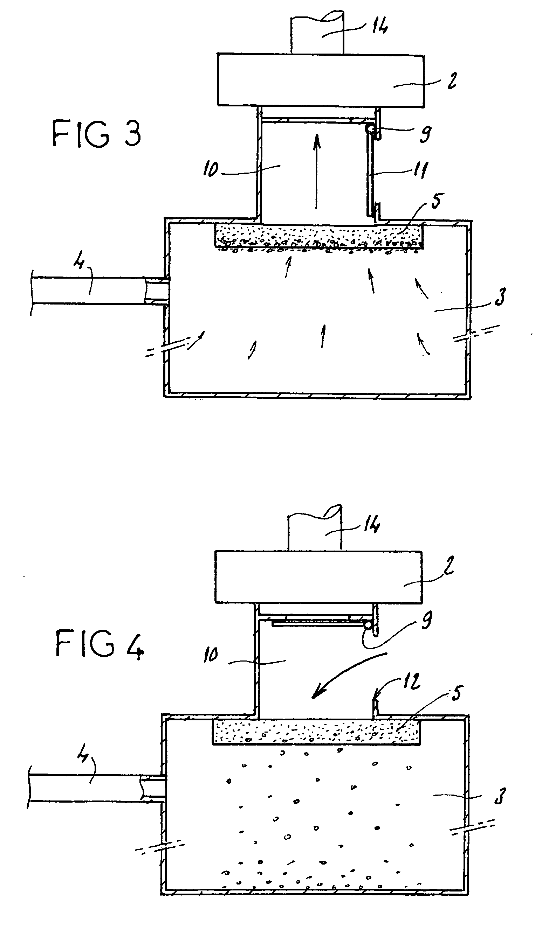

En mode de fonctionnement normal d'aspiration, l'utilisateur connecte le balai d'aspiration 7 à l'une des prises d'aspiration obturables 6 de l'installation - qui sont fermées par un clapet 15 lorsque l'installation est à l'arrêt - , ce qui déclenche le fonctionnement de la moto-turbine 2. Le volet 11 est alors basculé de manière à obturer l'ouverture 12 de mise à l'air libre du bloc 10, comme illustré à la figure 3. L'aspiration créée par la moto-turbine 2 met la cuve 3 en dépression et les particules et poussières portées par l'air aspiré au niveau du balai 7 sont retenues par le filtre 5. L'air filtré passe ensuite dans le bloc de mise à l'air libre 10, puis à travers la moto-turbine 2, puis est expulsé par la sortie d'air 14. Lorsque l'utilisateur retire le balai 7 de l'une des prises 6, l'installation 1 s'arrête.

L'interrupteur de marche/arrêt de l'installation est relié aux prises d'aspiration de deux manières possibles. Pour les installations bas et moyenne gamme, des fils en série relient chacune des prises et permettent de connaître la position de chaque prise: si le clapet d'obturation de la prise est ouvert, l'interrupteur déclenche le fonctionnement de l'installation, et s'il est abaissé en position d'obturation, l'installation s'arrête. Les installations haut de gamme utilisent soit une onde de surpression générée par la poignée du balai pour la mise en route et une obstruction du flexible ou du balai pour l'arrêt, soit par une onde acoustique pour la mise en route et l'arrêt.

Selon le procédé de l'invention, le décolmatage est automatique, contrôlé par le module de gestion électronique 13 qui gère le basculement du volet 11 pour dégager/obturer l'ouverture de mise à l'air libre 12. Plus précisément, le procédé consiste, au moment où la cuve 3 est en dépression, en l'ouverture automatique et instantanée du volet 11 situé dans la portion entre le filtre 5 et la moto-turbine 2 de manière à effectuer la mise à l'air libre de cette portion pendant un temps prédéterminé équivalent à quelques secondes, ceci ayant pour effet de provoquer un brusque flux d'air à pression atmosphérique, qui va à contre-courant à travers le filtre 5 combler la dépression d'air dans la cuve 3, et de préférence également dans l'ensemble de canalisations 4 en amont. Le flux d'air à contre-courant entraîne les particules et poussières agglutinées à l'intérieur - dans les pores du filtre - et à la surface amont du filtre, qui se déposent au fond de la cuve 3. En outre, on a noté que la dépression créée dans la cuve et l'ensemble de canalisations est telle, que la mise à l'air libre et le flux d'air à contre-courant ainsi créé, permet avantageusement de créer un effet de retour d'air dans l'ensemble de canalisations, et de décolmater ces canalisations - au niveau des coudes ou embranchements qui sont parfois bouchés par de grosses particules -.

Avantageusement, l'invention comporte deux modes particuliers de réalisation du procédé décrit ci-dessus, pouvant éventuellement être combinés.

Dans un premier mode de réalisation, le décolmatage est effectué lors de la phase d'arrêt de l'installation d'aspiration 1. Lorsque l'utilisateur débranche le balai 7 de l'une des prises d'aspiration 6, le clapet d'obturation 15 de cette prise 6 se referme, et la moto-turbine 2 fonctionne alors à débit nul. De plus, la fermeture du clapet 15 - est détectée par le module de gestion électronique 13 qui déclenche une temporisation automatique de l'arrêt de la moto-turbine 2, qui continue donc de tourner jusqu'à atteindre la dépression maximale dans la cuve 3, toujours à débit nul. De préférence, la durée de cette temporisation d'arrêt de la mototurbine varie de 4 à 6 secondes. A la fin de la temporisation, la moto-turbine s'arrête, et le module de gestion déclenche l'ouverture brutale du volet de mise à l'air libre 11, ceci ayant pour effet de provoquer un brusque flux d'air à contre-courant à travers le filtre 5, comme décrit ci-dessus. Comme décrit ci-dessus, c'est la violence de l'ouverture du volet la dépression maximale générée par la moto-turbine en l'absence de débit, ce qui est supérieur à la pression de colmatage en cours de fonctionnement en aspiration.

Dans un second mode de réalisation, l'ouverture automatique du volet s'effectue en outre pendant le fonctionnement en aspiration, et à dépression non-maximale dans la cuve et par impulsions répétées. Par impulsions, on entend des cycles d'ouverture / fermeture du volet 11 d'une durée comprise entre quelques dixièmes de secondes et quelques secondes, de préférence entre 0.3 et 0.6 secondes. Il est à noter que dans ce mode de réalisation, comme dans le mode de décomatage au seul moment de l'arrêt de l'installation, c'est la durée de passage du volet de sa position fermée à sa position ouverte qui déterminera l'efficacité de décolmatage. En tout état de cause, cette durée ne doit pas de préférence excéder 20ms. De telles impulsions permettent de dégager le filtre des impuretés les plus grosses, sans affecter l'efficacité globale de l'aspiration, et donc sans gêne pour l'utilisateur.

Avantageusement dans les modes de réalisation ci-dessus, le volet 11 de mise à l'air libre permet, lorsqu'il est en position de mise à l'air libre du filtre - c'est-à-dire dégageant l'ouverture 12 -, de simultanément obturer la prise d'air de la moto-turbine 2, mais cette obturation simultanée n'est pas obligatoire. Ainsi, l'air à pression atmosphérique entrant par l'ouverture 12 n'est pas aspiré en aval par la moto-turbine 2, et la différence de pression entre l'air de la cuve 3 et l'air entrant, reste importante. Le flux d'air à contre-courant reste donc puissant.

Alternativement, on peut imaginer que l'obturation simultanée de la prise d'air de la mototurbine lors de l'ouverture du volet de mise à l'air libre, n'est que partielle, comme illustré à la figure 2c. Ceci peut permettre un décolmatage intermittent (pendant le fonctionnement de l'installation) beaucoup plus rapide et efficace puisque la refermeture du volet sera plus rapide. La durée totale du cycle ouverture-mise à l'air libre-refermeture du volet est donc plus courte et gêne moins l'aspiration.

Comme il va de soi l'invention ne se limite pas aux seules formes d'exécution du procédé de décolmatage automatique, du dispositif ou de l'installation d'aspiration centralisée, décrites ci-dessus à titre d'exemples, elle en embrasse au contraire toutes les variantes. C'est ainsi notamment que la nature des filtres utilisés peut varier grandement, des filtres à structure la plus simple comme des plaques de feutre ou de mousse alvéolaire, jusqu'à des filtres plus complexes, par exemple constitués d'une membrane montée sur une structure déformable comme un ressort.

On peut également envisager des structures diverses pour les moyens de mise à l'air libre décrits ci-dessus. Outre l'utilisation d'un volet basculant autour d'un axe, on peut envisager, à titre d'exemple, l'utilisation d'une électrovanne.

Enfin, on peut envisager que l'ouverture et le volet de mise à l'air libre soient situés non pas directement dans le bloc de mise à l'air libre situé entre la cuve et la mototurbine. En particulier dans le cas ou le filtre est consitué par un sac filtre disposé à l'intérieur de la cuve, on peut envisager de disposer l'ouverture et le volet de mise à l'air libre dans l'une des parois de la cuve comme illustré à la figure 2c. cette disposition n'affecte absolument pas l'efficacité du décolmatage.

## Revendications

1. Ensemble d'aspiration pour une installation d'aspiration centralisée (1), comprenant une cuve (3) pour l'accumulation des poussières, une moto-turbine (2) capable de créer un flux d'aspiration dans la cuve (3), un filtre à poussières (5) situé entre la cuve (3) et la moto-turbine (2), un dispositif de décolmatage du filtre, la cuve (3) étant connectée à un ensemble de canalisations (4) terminées par des prises obturables (6), le dispositif de décolmatage comportant :
- un bloc de mise à l'air libre (10) disposé en aval du filtre (5) et en amont de la moto-turbine (2), comprenant une ouverture de mise à l'air libre (12) ouvrant sur l'air ambiant à pression atmosphérique obturable par des moyens de mise à l'air libre (11), et
- un module électronique de gestion (13) contrôlant le passage des moyens de mise à l'air libre (11) en position ouverte pour dégager l'ouverture (12) et ainsi effectuer la mise à l'air libre du bloc (10) lorsque la cuve (3) est en dépression, pendant un temps prédéterminé,
**caractérisé en ce que** le module électronique de gestion (13) comporte des moyens aptes à détecter la fermeture de toutes les prises obturables (6) et à commander, après ladite fermeture, le maintien du fonctionnement de la moto-turbine (2) jusqu'à atteindre la dépression maximale dans la cuve (3) à débit nul, puis, après cette temporisation, l'ouverture des moyens (11) de mise à l'air libre, pour réaliser la mise à l'air libre du bloc (10), et après l'arrêt de la moto-turbine.

2. Ensemble d' aspiration selon la revendication 1, **caractérisé en ce que** le module de gestion électronique commande en outre l'ouverture automatique des moyens de mise à l'air libre (11) pendant le fonctionnement en aspiration, à dépression non-maximale dans la cuve (3) et par impulsions répétées.

3. Ensemble d' aspiration selon les revendications 1 ou 2, **caractérisé en ce que** les moyens de mise à l'air libre sont constitués d'un volet basculant (11).

4. Ensemble d' aspiration selon l'une des revendications 1 à 3, **caractérisé en ce qu'**il comporte un électro-aimant (17) situé dans le bloc de mise à l'air libre (10) à proximité de l'ouverture de mise à l'air libre (12), l'électro-aimant (17) permettant de maintenir les moyens de mise à l'air libre (11) en position d'obturation de l'ouverture de mise à l'air libre (12) pendant le fonctionnement du système (1) en aspiration, le passage desdits moyens de mise à l'air libre (11) en position ouverte s'effectuant sous l'effet de la dépression lorsque le module de gestion électronique (13) commande l'arrêt de l'alimentation électrique de l'électroaimant.

5. Ensemble d' aspiration selon l'une des revendications 1 à 3, **caractérisé en ce qu'**il comporte un premier électro-aimant situé dans le bloc de mise à l'air libre (10), à proximité de l'ouverture de mise à l'air libre (12), et un second électro-aimant situé à proximité de l'ouverture entre le bloc (10) et la moto-turbine (2),de sorte que les moyens de mise à l'air libre (11) passent de la position fermée pendant l'aspiration, à la position ouverte pour mise à l'air libre, par alimentation électrique successivement du premier et du second électro-aimant.

6. Ensemble d' aspiration selon l'une des revendications précédentes, **caractérisé en ce que** les moyens de mise à l'air libre (11) permettent, lorsqu'ils sont en position ouverte pour mise à l'air libre, d'obturer l'ouverture entre le bloc (10) et la moto-turbine (2).

7. Ensemble d' aspiration selon l'une quelconque des revendications précédentes, **caractérisé en ce que** l'ouverture des moyens de mise à l'air libre (11) s'effectue en moins de 20 millisecondes.

8. Installation d'aspiration centralisée (1) comprenant une cuve (3) pour l'accumulation des poussières, un système de canalisations (4) connecté à la cuve (3), les canalisations étant terminées par des prises obturables (6), une moto-turbine (2) capable de créer un flux d'aspiration dans la cuve (3) et dans l'ensemble de canalisations (4), un filtre à poussières (5) situé entre la cuve (3) et la moto-turbine (2), **caractérisé en ce qu'**elle comporte un ensemble de décolmatage automatique selon l'une des revendications 1 à 7.

9. Procédé de décolmatage d'un ensemble d'aspiration selon l'une des revendications 1 à 7, **caractérisé en ce que**, après la détection de la fermeture de toutes les prises d'aspiration du système d'aspiration (1) en amont de la moto-turbine (2), la moto-turbine (2) est maintenue en fonctionnement jusqu'à atteindre la dépression maximale dans la cuve (3) à débit nul, puis, après cette temporisation, les moyens de mise à l'air libre (11) passent automatiquement et instantanément en position ouverte et la moto-turbine (2) est arrêtée immédiatement après.

10. Procédé de décolmatage selon la revendication 9, **caractérisé en ce qu'**il consiste en outre à réaliser le passage automatique et instantané des moyens de mise à l'air libre (11) en position ouverte, pendant le fonctionnement en aspiration, et à dépression non-maximale dans la cuve (3) et par impulsions répétées.

11. Procédé selon l'une quelconque des revendications 9 ou 10, **caractérisé en ce que** les moyens de mise à l'air libre sont constitués par un volet basculant (11).

## Claims

1. A suction assembly for a centralized suction installation (1), comprising a tank (3) for accumulating dusts, a motor-driven impeller (2) capable of generating a suction flow in the tank (3), a dust filter (5) located between the tank (3) and the motor-driven impeller (2), a device for unclogging the filter, the tank (3) being connected to a set of ducts (4) terminated with obturatable connections (6), the unclogging device including:
- an air venting block (10), positioned downstream from the filter (5) and upstream from the motor-driven impeller (2), comprising an air venting aperture (12) opening on ambient air at atmospheric pressure, which may be obturated by air venting means (11), and
- an electronic management module (13) controlling the switching of the air venting means (11) to an open position in order to clear the aperture (12) and thereby performing air venting of the block (10) when the tank (3) is depressurized, for a predetermined time,
**characterized in that** the electronic management module (13) includes means capable of detecting the closing of all the obturatable connections (6) and of controlling, after said closing, the maintaining of the operation of the motor-driven impeller (2) until the maximum negative pressure is attained in the tank (3) at zero flow rate, in order to achieve air venting of the block (10), and after stopping the motor-driven impeller.

2. The suction assembly according to claim 1, **characterized in that** the electronic management module further controls the automatic opening of the air venting means (11) while operating with suction, with non-maximum negative pressure in the tank (3) and by repeated pulses.

3. The suction assembly according to claims 1 or 2, **characterized in that** the air venting means consist of a pivoting flap (11).

4. The suction assembly according to one of claims 1 to 3, **characterized in that** it includes an electromagnet (17) located in the air venting block (10), in proximity to the air venting aperture (12), the electromagnet (17) allowing the air venting means (11) to be maintained in the position for obturating the air venting aperture (12), while the system (1) is operating with suction, the switching of said air venting means (11) to the open position being performed under the effect of the negative pressure when the electronic management module (13) orders stopping of the electric power supply of the electromagnet.

5. The suction assembly according to one of claims 1 to 3, **characterized in that** it includes a first electromagnet located in the air venting block (10), in proximity to the air venting aperture (12), and a second electromagnet located in proximity to the aperture between the block (10) and the motor-driven impeller (2), so that the air venting means (11) switch from the closed position during suction, to the open position for air venting, by successively electrically powering the first and the second electromagnet.

6. The suction assembly according to one of the preceding claims, **characterized in that** the air venting means (11) when they are in the open position for air venting, allow obturation of the aperture between the block (10) and the motor-driven impeller (2).

7. The suction assembly according to any of the preceding claims, **characterized in that** the opening of the air venting means (11) is carried out in less than 20 milliseconds.

8. A centralized suction installation (1) comprising a tank (3) for accumulating dusts, a system of ducts (4) connected to the tank (3), the ducts being terminated by obturatable connections (6), a motor-driven impeller (2) capable of generating a suction flow in the tank (3), and in the duct assembly (4), a dust filter (5) located between the tank (3) and the motor-driven impeller (2), **characterized in that** it includes an automatic unclogging assembly according to one of claims 1 to 7.

9. The method for unclogging a suction assembly according to one of claims 1 to 7, **characterized in that**, after detecting the closing of all the suction connections of the suction system (1) upstream from the motor-driven impeller (2), the motor-driven impeller (2) is maintained in operation until the maximum negative pressure is attained in the tank (3) with zero flow rate, and then after this timing, the air venting means (11) automatically and instantaneously switch to the open position and the motor-driven impeller (2) is stopped immediately afterwards.

10. The unclogging method according to claim 9, **characterized in that** it further consists of achieving automatic and instantaneous switching of the air venting means (11), into the open position, when operating with suction, and with non-maximum negative pressure in the tank (3) and by repeated pulses.

11. The method according to any of claims 9 or 10, **characterized in that** the air venting means are formed with a pivoting flap (11).

## Patentansprüche

1. Ansauggruppe für eine zentralisierte Ansauganlage (1), die einen Behälter (3) für das Sammeln von Staub, eine Motorturbine (2), die imstande ist, einen Ansaugstrom in dem Behälter (3) zu erzeugen, einen Staubfilter (5), der sich zwischen dem Behälter (3) und der Motorturbine (2) befindet, eine Abreinigungsvorrichtung des Filters umfasst, wobei der Behälter (3) mit einer Kanalisationsgruppe (4) verbunden ist, die in verschließbaren Anschlüssen (6) enden, wobei die Abreinigungsvorrichtung aufweist:
- einen vor dem Filter (5) und nach der Motorturbine (2) angeordneten Lüftungsblock (10), der eine Lüftungsöffnung (12) umfasst, die zur Umgebungsluft mit atmosphärischem Druck öffnet und durch Lüftungsmittel (11) verschließbar ist, und
- ein elektronisches Verwaltungsmodul (13), das den Wechsel der Lüftungsmittel (11) in geöffnete Stellung kontrolliert, um die Öffnung (12) freizugeben und damit die Lüftung des Blocks (10) durchzuführen, wenn im Behälter (3) Unterdruck herrscht, während einer zuvor festgelegten Zeit,
**dadurch gekennzeichnet, dass** das elektronische Verwaltungsmodul (13) Mittel aufweist, die imstande sind, den Verschluss aller verschließbaren Anschlüsse (6) festzustellen und nach dem Verschluss die Aufrechterhaltung des Betriebs der Motorturbine (2) zu steuern, bis im Behälter (3) mit Durchsatz null der maximale Unterdruck erreicht ist und nach dieser Zeit das Öffnen der Lüftungsmittel (11) erfolgt, um den Block (10) zu lüften und danach die Motorturbine anzuhalten.

2. Ansauggruppe nach Anspruch 1, **dadurch gekennzeichnet, dass** das elektronische Verwaltungsmodul ferner das automatische Öffnen der Lüftungsmittel (11) während des Ansaugbetriebs bei nicht maximalem Unterdruck im Behälter (3) und durch wiederholte Impulse steuert.

3. Ansauggruppe nach den Ansprüchen 1 oder 2, **dadurch gekennzeichnet, dass** die Lüftungsmittel von einer schwingenden Klappe (11) gebildet werden.

4. Ansauggruppe nach einem der Ansprüche 1 bis 3, **dadurch gekennzeichnet, dass** sie einen Elektromagneten (17) aufweist, der sich im Lüftungsblock (10) in der Nähe der Lüftungsöffnung (12) befindet, wobei der Elektromagnet (17) ermöglicht, die Lüftungsmittel (11) während des Ansaugbetriebs des Systems (1) in Verschlussstellung der Lüftungsöffnung (12) zu halten, wobei der Wechsel der Lüftungsmittel (11) in geöffnete Stellung unter Einwirkung des Unterdrucks erfolgt, wenn das elektronische Verwaltungsmodul (13) den Stopp der Stromversorgung des Elektromagneten befielt.

5. Ansauggruppe nach einem der Ansprüche 1 bis 3, **dadurch gekennzeichnet, dass** sie einen ersten Elektromagneten aufweist, der sich im Lüftungsblock (10) in der Nähe der (12) Lüftungsöffnung befindet und einen zweiten Elektromagneten, der sich in der Nähe der Öffnung zwischen dem Block (10) und der Motorturbine (2) befindet, so dass die Lüftungsmittel (11) aus der geschlossenen Stellung während des Ansaugens in die geöffnete Stellung für das Lüften durch sukzessive elektrische Versorgung des ersten und des zweiten Elektromagneten wechseln.

6. Ansauggruppe nach einem der vorangehenden Ansprüche, **dadurch gekennzeichnet, dass** die Lüftungsmittel (11) erlauben, wenn sie in geöffneter Stellung für das Lüften sind, die Öffnung zwischen dem Block (10) und der Motorturbine (2) zu verschließen.

7. Ansauggruppe nach einem der vorangehenden Ansprüche, **dadurch gekennzeichnet, dass** das Öffnen der Lüftungsmittel (11) in weniger als 20 Millisekunden erfolgt.

8. Zentralisierte Ansauganlage (1), die einen Behälter (3) für das Sammeln von Staub, ein mit dem Behälter (3) verbundenes Kanalisationssystem (4), wobei die Kanalisationen in verschließbaren Anschlüssen (6) enden, eine Motorturbine (2), die imstande ist, einen Ansaugstrom im Behälter (3) und in der Kanalisationsgruppe (4) zu erzeugen, einen Staubfilter (5) zwischen dem Behälter (3) und der Motorturbine (2) umfasst, **dadurch gekennzeichnet, dass** sie eine automatische Abreinigungsgruppe nach einem der Ansprüche 1 bis 7 aufweist.

9. Abreinigungsverfahren einer Ansauggruppe nach einem der Ansprüche 1 bis 7, **dadurch gekennzeichnet, dass** die Motorturbine (2) nach Feststellung des Schließens aller Ansauganschlüsse des Ansaugsystems (1) vor der Motorturbine (2) im Betrieb bleibt, bis der maximale Unterdruck im Behälter (3) bei Durchsatz null erreicht ist und nach dieser Zeit die Lüftungsmittel (11) automatisch und sofort in die geöffnete Stellung wechseln und die Motorturbine (2) danach sofort angehalten wird.

10. Abreinigungsverfahren nach Anspruch 9, **dadurch gekennzeichnet, dass** es ferner darin besteht, den automatischen und sofortigen Wechsel der Lüftungsmittel (11) in die geöffnete Stellung während des Ansaugbetriebs und bei nicht maximalem Unterdruck im Behälter (3) und durch wiederholte Impulse durchzuführen.

11. Verfahren nach einem der Ansprüche 9 oder 10, **dadurch gekennzeichnet, dass** die Lüftungsmittel von einer schwingenden Klappe (11) gebildet werden.
